# EUROPEAN PATENT APPLICATION

(11) **EP 4 800 511 A1**
(43) Date of publication of application: **02.09.2026**
(21) Application number: 24882143.1
(22) Date of filing: 07.10.2024
(51) Int. Cl.: G05D 1/43

(54) **CONVEYANCE UNIT AND CONTROL METHOD FOR CONVEYANCE UNIT**

(30) Priority: 23.10.2023 JP 2023181662
(71) Applicant: Sumitomo Heavy Industries, Ltd., Tokyo 141-6025 (JP)
(72) Inventor: OISHI Kazuma, Obu-shi Aichi 474-8501 (JP)
(74) Representative: Louis Pöhlau Lohrentz
(86) International application number: PCT/JP2024/035835
(87) International publication number: WO 2025/089026

(57) **Abstract**

A conveyance unit (100) includes a first traveling carriage (1), a second traveling carriage (2), and a mounting table (30) supported by the first traveling carriage (1) and the second traveling carriage (2), in which the first traveling carriage (1) generates a first travel route to a destination, and the second traveling carriage (2) receives the first travel route and generates a second travel route to the destination such that a relative positional relationship with the first traveling carriage (1) is maintained.

## Description

### Technical Field

The present invention relates to a conveyance unit and a control method for a conveyance unit.

### Background Art

A transport technology using a plurality of unmanned transport vehicles is known. For example, there is a conveyance method of conveying a long object on a preset trajectory by a plurality of unmanned transport vehicles. Each of the plurality of unmanned transport vehicles has a vertical shaft that is provided to protrude from an upper surface of the unmanned transport vehicle and is rotatable in a horizontal plane, and a loading platform for connecting the plurality of unmanned transport vehicles is fixed to the vertical shaft.

### Citation List

### Patent Literature

[PTL 1] Japanese Unexamined Patent Publication No. 60-59406

### Summary of Invention

### Technical Problem

In the above-described transport technology, a traveling speed of each of the plurality of unmanned transport vehicles is controlled such that a horizontal force acting on each of the vertical shafts becomes zero. However, with this control, the plurality of unmanned transport vehicles may not be able to achieve smooth traveling in some cases. Therefore, the above-described technology has room for improvement from the viewpoint of smooth traveling of the plurality of traveling carriages.

One exemplary object of an aspect of the present invention is to provide a conveyance unit capable of achieving smooth traveling.

### Solution to Problem

A conveyance unit according to an aspect of the present invention includes a first traveling carriage; a second traveling carriage; and a mounting table supported by the first traveling carriage and the second traveling carriage, in which the first traveling carriage generates a first travel route to a destination, and the second traveling carriage receives the first travel route and generates a second travel route to the destination such that a relative positional relationship with the first traveling carriage is maintained.

Another aspect of the present invention also provides a conveyance unit. The conveyance unit includes a first traveling carriage; a second traveling carriage; a mounting table supported by the first traveling carriage and the second traveling carriage; and a higher-level controller that controls the first traveling carriage and the second traveling carriage, in which the first traveling carriage generates a first travel route to a destination and transmits the first travel route to the higher-level controller, and the higher-level controller generates a second travel route for the second traveling carriage to the destination such that a relative positional relationship with the first traveling carriage is maintained, and transmits the second travel route to the second traveling carriage.

Still another aspect of the present invention provides a control method for a conveyance unit. The method is a control method for a conveyance unit including a first traveling carriage, a second traveling carriage, and a mounting table supported by the first traveling carriage and the second traveling carriage, the control method including: a step of generating a first travel route for the first traveling carriage to a destination; and a step of generating a second travel route for the second traveling carriage to the destination by referring to the generated first travel route. In the step of generating the second travel route, the second travel route is generated such that a relative positional relationship between the second traveling carriage 2 and the first traveling carriage 1 is maintained.

Note that any combinations of the above components, and those obtained by substituting the components or expressions in the present invention among methods, systems, or the like are also effective as an aspect of the present invention.

### Advantageous Effects of Invention

According to the present invention, it is possible to provide a conveyance unit capable of achieving smooth traveling.

### Brief Description of Drawings

FIG. 1 is a perspective view showing an example of a conveyance unit according to an embodiment.
FIG. 2 is a perspective view showing traveling carriages of FIG. 1.
FIG. 3 is a view showing a disposition of wheels of the traveling carriages of FIG. 1.
FIG. 4 is a block diagram schematically showing a configuration of the conveyance unit of FIG. 1.
FIG. 5 is a flowchart showing a first operation of the conveyance unit according to the embodiment.
FIG. 6 is a flowchart showing a second operation of the conveyance unit according to the embodiment.
FIG. 7 is a perspective view showing an example of a conveyance unit according to a first modification example.

### Description of Embodiments

Hereinafter, the present invention will be described with reference to the drawings based on a preferred embodiment. In the embodiments and modification examples, the same or equivalent components and members will be represented by the same reference numerals and duplicate descriptions will be appropriately omitted. In addition, dimensions of the members in each drawing are shown enlarged or reduced as appropriate for easy understanding. Moreover, in each drawing, some of the members not important for the description of the embodiment are not shown.

Further, terms including ordinal numbers such as first and second are used to describe various components, but these terms are only used to distinguish one component from another component and do not limit the components by these terms.

### [Embodiment]

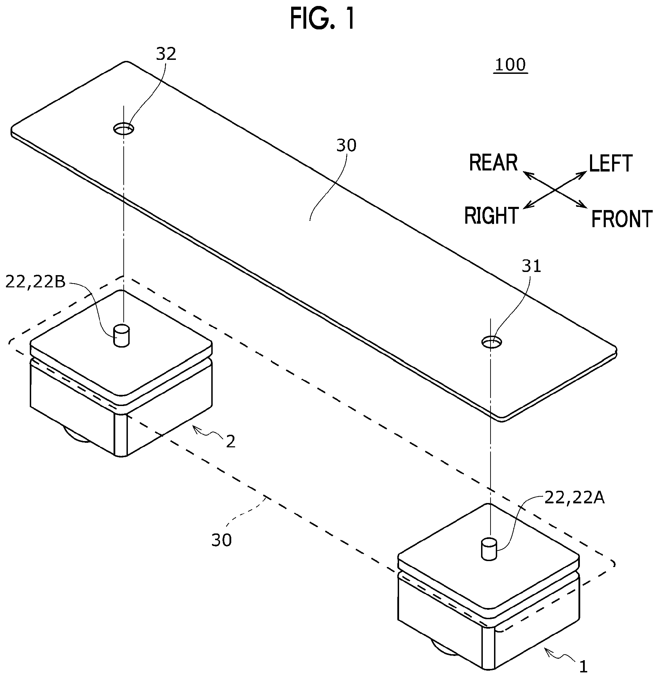

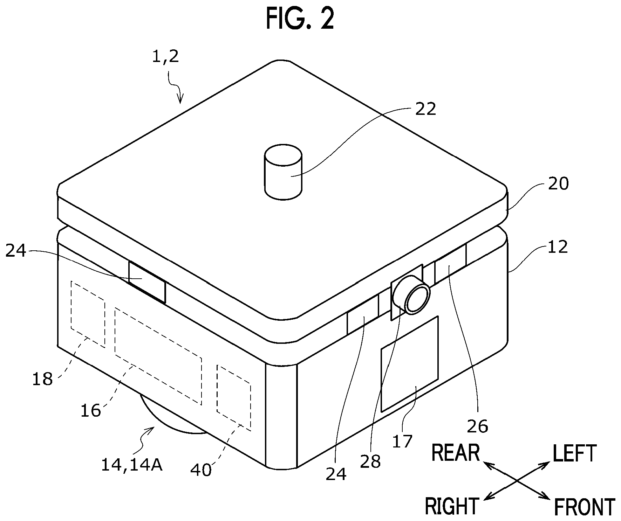

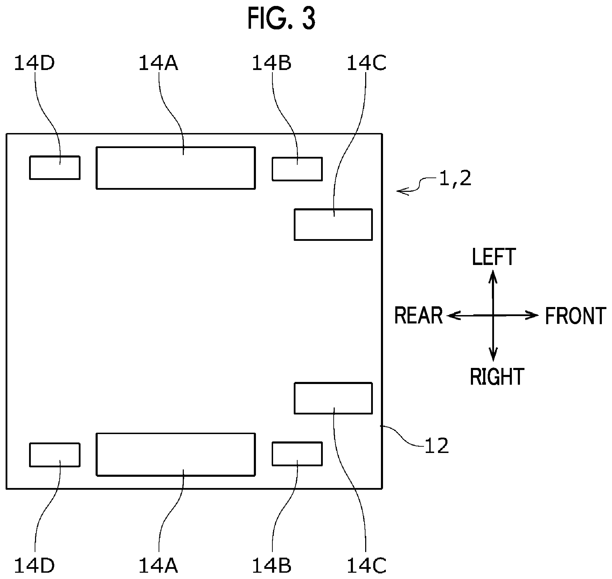

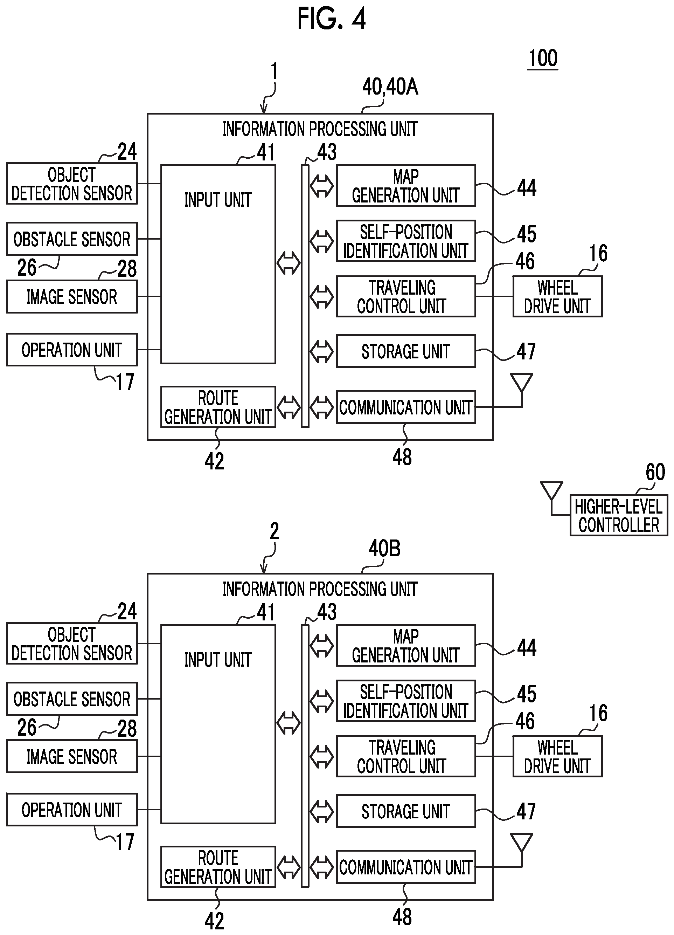

A configuration of a conveyance unit 100 according to the embodiment will be described with reference to FIGS. 1 to 4. FIG. 1 is a perspective view showing an example of the conveyance unit 100. FIG. 2 is a perspective view showing traveling carriages 1 and 2. FIG. 3 is a view showing a disposition of wheels of the traveling carriages 1 and 2. FIG. 4 is a block diagram schematically showing the configuration of the conveyance unit 100. The conveyance unit 100 is a conveyance unit including a first traveling carriage 1, a second traveling carriage 2, and a mounting table 30 supported by the first traveling carriage 1 and the second traveling carriage 2, and capable of conveying a load (not shown) to a destination with the load placed on the mounting table 30. In FIG. 1, the mounting table 30 before attachment is shown by a solid line, and the mounting table 30 after attachment is shown by a broken line.

The first traveling carriage 1 and the second traveling carriage 2 are collectively referred to as traveling carriages 1 and 2. The traveling carriages 1 and 2 are a type of unmanned transport vehicle, and can generate a travel route from a departure point to a destination and autonomously travel along the generated route. The departure point may be a current location or a separately set location.

The traveling carriages 1 and 2 have connecting portions 22 connected to the connection receiving portions 31 and 32, respectively, provided on the mounting table 30. The connection receiving portions 31 and 32 include a first connection receiving portion 31 and a second connection receiving portion 32 that are disposed apart from each other. The first connection receiving portion 31 is connected to the connecting portion 22 of the first traveling carriage 1, and the second connection receiving portion 32 is connected to the connecting portion 22 of the second traveling carriage 2. With this configuration, the traveling carriages 1 and 2 support the mounting table 30.

As an example, the traveling carriages 1 and 2 may be autonomous mobile robots (AMRs) that autonomously move to the destination. The traveling carriages 1 and 2 of the embodiment can generate a travel route from a departure point to a destination and autonomously travel along the generated route. The autonomous travel of the traveling carriages 1 and 2 can be realized by using an autonomous travel technology based on a known principle. As an example, the traveling carriages 1 and 2 of the embodiment autonomously travel using a control technology called simultaneous localization and mapping (SLAM).

Since SLAM is a known technology, detailed description thereof will be omitted. SLAM can simultaneously perform a self-position identification function and a map creation function of the traveling carriages 1 and 2. The map creation function is a function of acquiring surrounding information on what is present in the surroundings through an imaging unit or a mounted sensor and creating map information, which is a map of the surroundings, based on the surrounding information. The self-position identification function is a function of comparing the map information with storage data of information on a place stored in advance and identifying a self-position and a self-direction on the map in a case where the storage data and the map information match. The traveling carriages 1 and 2 can calculate a distance between itself and an obstacle, a landmark, or the like in the surroundings using SLAM and control the traveling to avoid the obstacle based on the calculation result.

The traveling carriages 1 and 2 of the embodiment include a vehicle body 12, a plurality of wheels 14A to 14D, a wheel drive unit 16, an operation unit 17, a battery 18, a top plate 20, an object detection sensor 24, an obstacle sensor 26, an image sensor 28, a connecting portion 22, and an information processing unit 40. The object detection sensor 24, the obstacle sensor 26, and the image sensor 28 are collectively referred to as mounted sensors.

The operation unit 17 receives input information based on an operation of a user and provides the input information to the information processing unit 40. The information processing unit 40 performs turning on/off of a power supply and switches an operation mode between a master mode and a slave mode based on the input information of the operation unit 17. The master mode is a mode in which the traveling carriage operates as the first traveling carriage, and the slave mode is a mode in which the traveling carriage operates as the second traveling carriage. The traveling carriages 1 and 2 have both the modes and can switch the modes. Hereinafter, an example in which the first traveling carriage 1 operates in the master mode and the second traveling carriage 2 operates in the slave mode will be described. In addition, the operation unit 17 receives input of information related to traveling of the user, such as a destination, and provides the information to the information processing unit 40.

The vehicle body 12 functions as an outer shell that surrounds components accommodated therein. The vehicle body 12 of this example has a substantially rectangular parallelepiped shape. A straight traveling direction of the vehicle body 12 is referred to as "front" or "forward", an opposite direction thereof is referred to as "rear" or "rearward", a right direction in the straight traveling direction is referred to as "right" or "rightward", and an opposite direction thereof is referred to as "left" or "leftward".

As shown in FIG. 2, the plurality of wheels 14A to 14D are attached to the inside of the vehicle body 12 such that a part of the wheels protrudes downward from the vehicle body 12. The configuration of the plurality of wheels 14A to 14D is not limited, but in the embodiment, as shown in FIG. 3, the plurality of wheels 14A to 14D include two first wheels 14A, two second wheels 14B, two third wheels 14C, and two fourth wheels 14D. The two first wheels 14A are drive wheels driven by the wheel drive unit 16 and are spaced apart from each other on the left and right in the vicinity of the front-rear center. The two second wheels 14B are driven wheels and are spaced apart from each other on the left and right in front of the first wheels 14A. The two third wheels 14C are driven wheels and are spaced apart from each other on the left and right in front of the second wheels 14B. The two fourth wheels 14D are driven wheels and are spaced apart from each other on the left and right behind the first wheels 14A.

The wheel drive unit 16 rotationally drives the two first wheels 14A based on the control of the information processing unit 40. The wheel drive unit 16 of the present embodiment includes two gear motors (not shown) corresponding to the two first wheels 14A, respectively. The wheel drive unit 16 may include a known drive device such as a motor or an engine instead of the gear motor. The traveling carriages 1 and 2 move forward or backward by rotationally driving the two first wheels 14A at the same speed, and turn right or left by causing a speed difference between the two first wheels 14A.

The battery 18 supplies power to the wheel drive unit 16, the object detection sensor 24, the obstacle sensor 26, the image sensor 28, and the information processing unit 40. The battery 18 of the embodiment is a lithium ion battery. The battery 18 may include a secondary battery based on a known principle instead of the lithium ion battery.

The top plate 20 is a plate-shaped member attached to the upper side of the vehicle body 12 to cover the upper side of the vehicle body 12. The top plate 20 of the embodiment has a substantially rectangular outer shape substantially the same as the outer shape of the vehicle body 12 in a plan view. The mounting table 30 is placed on the upper surface of the top plate 20.

The object detection sensor 24 detects an object outside the vehicle body 12 and provides the detection result to the information processing unit 40. The information processing unit 40 creates a map based on the detection result of the object detection sensor 24 when the map is created. The information processing unit 40 identifies the self-position on the map based on the detection result of the object detection sensor 24 during autonomous travel. In the embodiment, the object detection sensor 24 is provided on each of the front, rear, left, and right surfaces of the vehicle body 12. FIG. 2 shows only the object detection sensor 24 disposed on the front surface and the left surface.

The object detection sensor 24 is a sensor capable of detecting an object to be detected within a detection range by receiving reflected light of detection light projected by the object detection sensor 24 toward the outside of the vehicle body. As an example, the object detection sensor 24 projects the detection light in a range that spreads radially around the object detection sensor 24 between the vehicle body 12 and the top plate 20. As an example, the object detection sensor 24 of the embodiment is a light detection and ranging (LiDAR).

The obstacle sensor 26 detects an obstacle outside the vehicle body 12 and provides the detection result to the information processing unit 40. The information processing unit 40 controls the traveling of the traveling carriages 1 and 2 to avoid the obstacle based on the detection results of the object detection sensor 24 and the obstacle sensor 26 during autonomous travel. In the embodiment, three obstacle sensors 26 are disposed on the front surface of the vehicle body 12, and one obstacle sensor 26 is disposed on each of the left and right side surfaces. FIG. 2 shows only the obstacle sensor 26 disposed on the front surface. The obstacle sensor 26 is an optical sensor, and the optical axis of the detection light is directed upward by 5 degrees with respect to the horizontal plane.

The image sensor 28 detects a guide mark provided on fixtures or facilities such as a floor, a ceiling, a wall, or a shelf, and provides the detection result to the information processing unit 40. The guide mark of the embodiment includes a line formed on a floor surface and a two-dimensional marker such as a two-dimensional code. The image sensor 28 of the embodiment is a camera including a lens (not shown) and an imaging element (not shown), and is attached to the front surface of the vehicle body 12. The information processing unit 40 stores the detection result of the image sensor 28 as reference data corresponding to the map when the map is created. The information processing unit 40 compares the detection result of the image sensor 28 with the stored reference data during autonomous travel, and uses the comparison result for self-position identification on the map. The information processing unit 40 may compare the detection result of the object detection sensor 24 with the stored reference data during autonomous travel, and use the comparison result for self-position identification on the map.

The connecting portion 22 and the connection receiving portions 31 and 32 will be described. By providing the connecting portion 22 and the connection receiving portions 31 and 32, the first traveling carriage 1 and the mounting table 30 are rotatably connected to each other to allow relative rotation, and the second traveling carriage 2 and the mounting table 30 are rotatably connected to each other to allow relative rotation. In this case, the conveyance unit 100 can smoothly travel when traveling on a curve, and excessive force is less likely to be applied to the connecting portion 22 or the connection receiving portions 31 and 32.

The connecting portion 22 of the embodiment is a rod-shaped portion that protrudes upward from the top plate 20, and has, for example, a cylindrical shape. The connection receiving portions 31 and 32 of the embodiment are holes through which the connecting portion 22 can penetrate up and down. The clearance between the connection receiving portions 31 and 32 and the connecting portion 22 is set such that the mounting table 30 can rotate in the horizontal direction around the connecting portion 22. In addition, the clearance is set such that the mounting table 30 can be inclined with respect to the upper surface of the top plate 20 within a predetermined range.

The information processing unit 40 will be described. Hereinafter, for distinction, the information processing unit 40 mounted on the first traveling carriage 1 will be referred to as an information processing unit 40A, and the information processing unit 40 mounted on the second traveling carriage 2 will be referred to as an information processing unit 40B.

Each functional block of the information processing unit 40 shown in FIG. 4 can be realized by hardware elements such as a processor, a CPU, and a memory of a computer, an electronic circuit, and a mechanical device, and in terms of software, by computer programs and the like. However, here, the functional blocks realized by the cooperation of these elements are shown. Accordingly, it is understood by those skilled in the art that these functional blocks can be realized in various forms by a combination of hardware and software.

The information processing unit 40 includes an input unit 41, a route generation unit 42, a map generation unit 44, a self-position identification unit 45, a traveling control unit 46, a storage unit 47, and a communication unit 48. These functional blocks can exchange information with each other via an information transmission path 43 such as a data bus.

The input unit 41 acquires the detection result of the mounted sensor and the input information of the operation unit 17. The route generation unit 42 generates a travel route to a destination. The departure point of the travel route may be the current location or may be a separately set location. The departure point and the destination can be input by the user via the operation unit 17 or can be input from the higher-level controller 60 via the communication unit 48. In this specification, the higher-level controller 60 includes a computer system and a mobile information terminal such as a smartphone or a tablet terminal.

The map generation unit 44 creates a map based on the detection result of the mounted sensor acquired by the input unit 41 when the map is created. The map generation unit 44 corrects the map based on the detection result of the mounted sensor acquired by the input unit 41 during autonomous travel.

The self-position identification unit 45 identifies the self-position on the map based on the detection result of the mounted sensor during autonomous travel. The traveling control unit 46 controls the wheel drive unit 16 to travel on the generated route based on the identified self-position during autonomous travel. The storage unit 47 stores the information input by the input unit 41, the map generated by the map generation unit 44, the route generated by the route generation unit 42, the identified self-position, and the like. The communication unit 48 transmits and receives information to and from an external device such as the communication unit 48 of another traveling carriage and the higher-level controller 60 via a wireless or wired communication line.

The operation of the conveyance unit 100 configured as described above will be described.

### (First Operation)

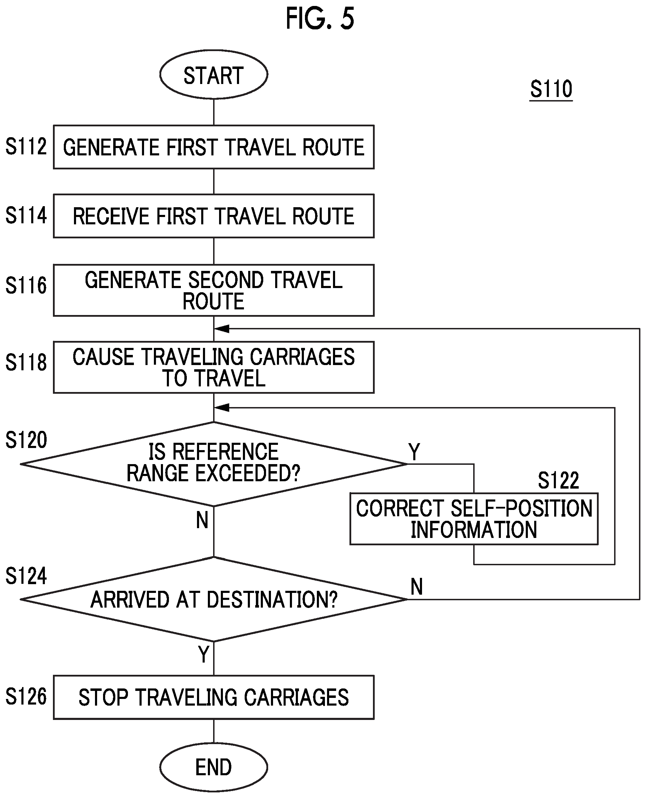

The first operation S110 of the conveyance unit 100 will be described with reference to FIG. 5. FIG. 5 is a flowchart showing the first operation S110. As an example, the first operation S110 is started by the conveyance unit 100 receiving a command to start the operation. This operation is mainly controlled by the information processing unit 40A of the first traveling carriage 1 and the information processing unit 40B of the second traveling carriage 2.

When the first operation S110 is started, the information processing unit 40A generates the first travel route for the first traveling carriage 1 to the destination (step S112). In this step, the information processing unit 40A receives the information on the departure point and the destination and the related information thereof by the communication unit 48. The information on the destination and the like may be transmitted from the higher-level controller 60. The information processing unit 40A generates the first travel route based on the information on the destination and the like. The operation of generating the first travel route can be realized by the above-described SLAM technique. The generated first travel route is stored in the storage unit 47 of the information processing unit 40A.

Next, the second traveling carriage 2 receives the generated first travel route (step S114). In this step, the information processing unit 40B receives the first travel route generated by the information processing unit 40A. The first travel route may be received directly from the information processing unit 40A, or may be received by the higher-level controller 60 and received via the higher-level controller 60.

Next, the information processing unit 40B generates the second travel route for the second traveling carriage 2 to the destination with reference to the received first travel route (step S116). In this step, the information processing unit 40B generates the route such that the relative positional relationship between the second traveling carriage 2 and the first traveling carriage 1 is maintained. In the embodiment, maintaining the relative positional relationship between the carriages is maintaining the distance between the connecting portion 22A of the first traveling carriage 1 and the connecting portion 22B of the second traveling carriage 2 within a certain range. The generated second travel route is stored in the storage unit 47 of the information processing unit 40B.

Next, when the generation of the second travel route is completed, the information processing units 40A and 40B cause the first traveling carriage 1 and the second traveling carriage 2 to travel (step S118). In this step, the information processing unit 40A causes the first traveling carriage 1 to travel along the first travel route, and the information processing unit 40B causes the second traveling carriage 2 to travel along the second travel route. The information processing unit 40B may finely adjust the traveling speed or the traveling direction of the second traveling carriage 2 in order to maintain the relative positional relationship between the carriages. The operation of this step can be realized by the SLAM technology described above.

While the second traveling carriage 2 travels on the theoretical second travel route, the error of the self-position information of the second traveling carriage 2 held by the information processing unit 40B may increase, and the second traveling carriage 2 may deviate from the actual second travel route. Therefore, in the embodiment, the second traveling carriage 2 performs a self-position information correction operation to determine whether its self-position is erroneously detected based on the distance from the first traveling carriage 1 and to correct the self-position information.

Specifically, the information processing unit 40B detects the distance between the second traveling carriage 2 and the first traveling carriage 1, and determines whether or not the detection result exceeds a predetermined reference range (step S120). In this step, the distance between the second traveling carriage 2 and the first traveling carriage 1 can be determined using the state of the gap between the connecting portion 22B and the connection receiving portion 32 or the load received by the connecting portion 22B from the connection receiving portion 32. In this example, the information processing unit 40B determines that the distance from the first traveling carriage 1 exceeds the predetermined reference range when the load received by the connecting portion 22B exceeds the threshold value.

When the distance between the second traveling carriage 2 and the first traveling carriage 1 exceeds the predetermined reference range (Y in step S120), the information processing unit 40B corrects the self-position information based on the detection result of the mounted sensor (step S122). The correction of the self-position information may be the correction of the self-position on the map, and can be realized, for example, by correcting the identification result of the self-position identification unit 45 or correcting the map information. After step S122 is executed, the process returns to the beginning of step S120.

When the distance between the second traveling carriage 2 and the first traveling carriage 1 is within the predetermined reference range (N in step S120), the information processing units 40A and 40B determine whether or not the first traveling carriage 1 and the second traveling carriage 2 have arrived at the destination (step S124).

When the first traveling carriage 1 and the second traveling carriage 2 have not arrived at the destination (N in step S124), the process returns to the beginning of step S118. When the first traveling carriage 1 and the second traveling carriage 2 have arrived at the destination (Y in step S124), the information processing units 40A and 40B stop the traveling of the first traveling carriage 1 and the second traveling carriage 2 (step S126).

When the traveling is stopped, the first operation S110 ends. Each of the above-described steps is an example, and various changes can be made.

### (Second Operation)

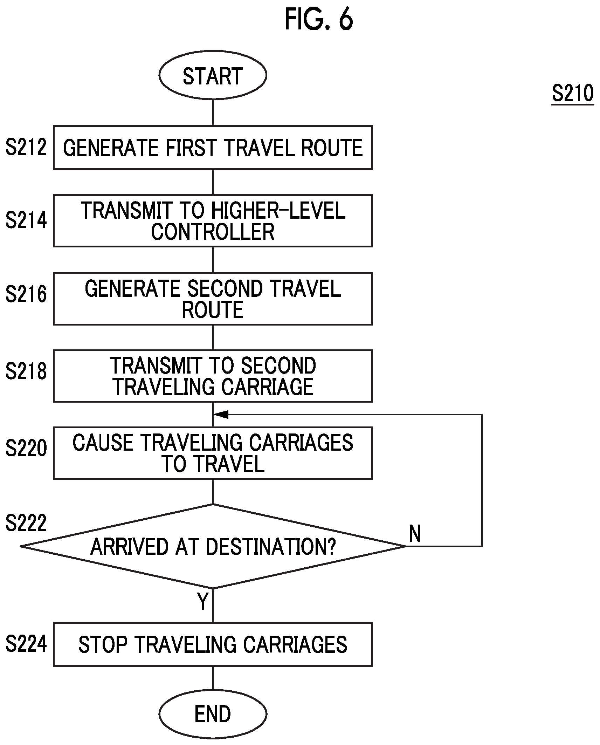

The second operation S210 of the conveyance unit 100 will be described with reference to FIG. 6. FIG. 6 is a flowchart showing the second operation S210. As an example, the second operation S210 is started by the conveyance unit 100 receiving a command to start the operation. This operation is mainly controlled by the information processing unit 40A of the first traveling carriage 1, the information processing unit 40B of the second traveling carriage 2, and the higher-level controller 60. The contents described in the first operation S110 can be applied to the second operation S210 as long as there is no contradiction. In addition, the description overlapping with the first operation S110 will be omitted.

When the second operation S210 is started, the information processing unit 40A generates the first travel route for the first traveling carriage 1 to the destination (step S212). This step is the same as step S112 of the first operation.

Next, the information processing unit 40A transmits the generated first travel route to the higher-level controller 60 (step S214).

Next, the higher-level controller 60 generates the second travel route for the second traveling carriage 2 to the destination with reference to the received first travel route (step S216). In this step, the higher-level controller 60 generates the route such that the relative positional relationship between the second traveling carriage 2 and the first traveling carriage 1 is maintained.

Next, the higher-level controller 60 transmits the generated second travel route to the second traveling carriage 2 (step S218).

Next, the information processing units 40A and 40B cause the first traveling carriage 1 and the second traveling carriage 2 to travel (step S220). In this step, the information processing unit 40A causes the first traveling carriage 1 to travel along the first travel route, and the information processing unit 40B causes the second traveling carriage 2 to travel along the second travel route.

Next, the information processing units 40A and 40B determine whether or not the first traveling carriage 1 and the second traveling carriage 2 have arrived at the destination (step S222).

When the first traveling carriage 1 and the second traveling carriage 2 have not arrived at the destination (N in step S222), the process returns to the beginning of step S220. When the first traveling carriage 1 and the second traveling carriage 2 have arrived at the destination (Y in step S222), the information processing units 40A and 40B stop the traveling of the first traveling carriage 1 and the second traveling carriage 2 (step S224).

When the traveling is stopped, the second operation S210 ends. Each of the above-described steps is an example, and various changes can be made. For example, the second operation S210 may include a step of performing the self-position information correction operation described in the first operation S110.

The features of the conveyance unit 100 according to the present embodiment will be described. The conveyance unit 100 includes the first traveling carriage 1, the second traveling carriage 2, and the mounting table 30 supported by the first traveling carriage 1 and the second traveling carriage 2, in which the first traveling carriage 1 generates the first travel route to the destination, and the second traveling carriage 2 receives the first travel route and generates the second travel route to the destination such that a relative positional relationship with the first traveling carriage 1 is maintained.

According to this configuration, the second traveling carriage 2 can generate the second travel route such that the relative positional relationship with the first traveling carriage 1 is maintained, with reference to the first travel route for the first traveling carriage 1. The second travel route can be generated in a shorter time than when the first travel route is not referenced, and a delay in following by the second traveling carriage 2 can be reduced. As a result, the smooth traveling of the conveyance unit 100 can be achieved. The load applied to the connection mechanism between the traveling carriages 1 and 2 and the mounting table 30 is reduced, and the durability of the connection mechanism is improved. Since the smooth traveling can be performed, the traveling speed can be increased, and the conveyance efficiency can be improved.

Hereinbefore, examples of the embodiments of the present invention have been described in detail. Each of the embodiments described above is merely a specific example for implementing the present invention. The contents of the embodiment are not intended to limit the technical scope of the present invention and various design changes such as modification, addition, and deletion of components can be made without departing from the scope of the invention defined in the claims. In the above-described embodiment, the contents regarding such a design change are described with the notation such as "the embodiment" and "in the embodiment", but the design change can be allowed for the contents without such a notation.

### [Modification Example]

Hereinafter, modification examples will be described. In the drawings and description of the modification examples, the same or equivalent components and members as the embodiment will be represented by the same reference numerals. Description overlapping with that in the embodiment will be omitted as appropriate, and description will be made focusing on configurations different from those in the embodiment.

### (First Modification Example)

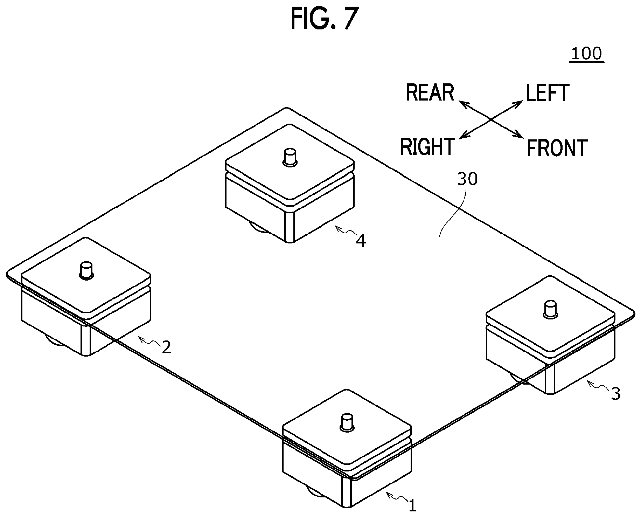

In the above description, an example in which the conveyance unit 100 includes a single second traveling carriage 2 has been described, but the present invention is not limited thereto. The conveyance unit may include a plurality of second traveling carriages. By including a plurality of second traveling carriages, an object having a larger mass can be conveyed. FIG. 7 is a perspective view showing the conveyance unit 100 according to the first modification example. In this drawing, the mounting table 30 is shown as being transparent for easy understanding.

The conveyance unit 100 of the first modification example includes a single first traveling carriage 1, three second traveling carriages 2, 3, and 4, and a mounting table 30. The four corners of the mounting table 30 are supported by the first traveling carriage 1 and the three second traveling carriages 2, 3, and 4, respectively.

The first traveling carriage 1 generates a first travel route to a destination. Each of the three second traveling carriages 2, 3, and 4 receives the generated first travel route, and generates a second travel route to the destination such that a relative positional relationship with the first traveling carriage 1 is maintained. The first traveling carriage 1 travels along the first travel route, and the three second traveling carriages 2, 3, and 4 travel along their respective second travel routes. The matters described in the embodiment also apply to the first modification example as long as there is no contradiction.

### (Other Modification Examples)

In the above description, an example in which the connecting portions 22 are fitted to the connection receiving portions 31 and 32 has been described, but the present invention is not limited thereto. Bearing means such as a rolling bearing or a sliding bearing may be disposed between the connecting portion and the connection receiving portion. In this case, smoother curve traveling is possible.

In the above description, an example in which the connecting portion 22 is a protruding member and the connection receiving portions 31 and 32 are holes has been described, but the present invention is not limited thereto. For example, the connection receiving portions may be a protruding member, and the connecting portion may be a hole that is fitted to the protruding member.

In the above description, an example in which the route generation unit 42 generates a single travel route has been described, but the present invention is not limited thereto. For example, the route generation unit may generate a plurality of travel routes. The conveyance unit may select a route satisfying a predetermined condition from among the generated plurality of travel routes and travel on the selected route. Examples of the predetermined condition include that the traveling distance is the shortest, the number of curves to be passed is the minimum, and the radius of the curve having the smallest radius among the curves in the route is the maximum.

In the above description, an example in which the detection information of the mounted sensor mounted on the traveling carriage 1 or 2 is used in the traveling carriage on which the sensor is mounted has been described, but the present invention is not limited thereto. For example, the detection information of the mounted sensor mounted on one of the traveling carriages 1 and 2 may be transmitted to the other carriage and used. In this case, it is possible to compensate for the blind spot of the mounted sensor.

Each of these modification examples exhibits the same operations and effects as those of the embodiment.

Any combination of the above-described embodiments and modification examples is useful as an embodiment according to the present invention. The new embodiment resulting from the combination has the effects of both the combined embodiment and modification examples.

### Industrial Applicability

The present invention can be used in the field of a conveyance unit and a control method for a conveyance unit.

### Reference Signs List

- 1: first traveling carriage
- 2: second traveling carriage
- 12: vehicle body
- 22: connecting portion
- 30: mounting table
- 31: first connection receiving portion
- 32: second connection receiving portion
- 42: route generation unit
- 44: map generation unit
- 100: conveyance unit

## Claims

1. A conveyance unit comprising:
a first traveling carriage;
a second traveling carriage; and a mounting table supported by the first traveling carriage and the second traveling carriage,
wherein the first traveling carriage generates a first travel route to a destination, and
the second traveling carriage receives the first travel route and generates a second travel route to the destination such that a relative positional relationship with the first traveling carriage is maintained.

2. A conveyance unit comprising:
a first traveling carriage;
a second traveling carriage; a mounting table supported by the first traveling carriage and the second traveling carriage; and
a higher-level controller that controls the first traveling carriage and the second traveling carriage,
wherein the first traveling carriage generates a first travel route to a destination and transmits the first travel route to the higher-level controller, and
the higher-level controller generates a second travel route for the second traveling carriage to the destination such that a relative positional relationship with the first traveling carriage is maintained, and transmits the second travel route to the second traveling carriage.

3. The conveyance unit according to claim 1 or 2, wherein the first traveling carriage and the mounting table are rotatably connected to each other to allow relative rotation, and the second traveling carriage and the mounting table are rotatably connected to each other to allow relative rotation.

4. The conveyance unit according to claim 1 or 2, wherein the second traveling carriage determines whether a self-position of the second traveling carriage is erroneously detected based on a distance between the second traveling carriage and the first traveling carriage and corrects self-position information of the second traveling carriage.

5. A control method for a conveyance unit including a first traveling carriage, a second traveling carriage, and a mounting table supported by the first traveling carriage and the second traveling carriage, the control method comprising:
a step of generating a first travel route for the first traveling carriage to a destination; and
a step of generating a second travel route for the second traveling carriage to the destination by referring to the generated first travel route,
wherein the step of generating the second travel route includes generating the second travel route such that a relative positional relationship between the second traveling carriage and the first traveling carriage is maintained.
